# FASCICULE DE BREVET EUROPEEN

(11) **EP 3 602 743 B1**
(45) Date de publication et mention de la délivrance du brevet: **10.11.2021**
(21) Numéro de dépôt: 18714561.0
(22) Date de dépôt: 21.03.2018
(51) Int. Cl.: H02K 21/24, H02K 1/27, H01F 7/02

(54) **STRUCTURE D'AIMANT À PLUSIEURS AIMANTS UNITAIRES SOUS FORME DE PLOTS**
MAGNETSTRUKTUR MIT MEHREREN EINZELMAGNETEN IN FORM VON BLÖCKEN
MAGNET STRUCTURE WITH A PLURALITY OF SINGLE MAGNETS IN THE FORM OF BLOCKS

(30) Priorité: 22.03.2017 FR 1700295; 08.09.2017 FR 1700906
(43) Date de publication de la demande: 05.02.2020
(73) Titulaire: Whylot SAS, 46100 Cambes (FR)
(72) Inventeur: MIHAILA, Vasile, 46100 Figeac (FR); MAYEUR, Loic, 12700 Saint Santin (FR); TIEGNA, Huguette, 46100 Figeac (FR); RAVAUD, Romain, F-46240 Coeur de Causse (FR)
(86) Numéro de dépôt international: PCT/FR2018/000066
(87) Numéro de publication internationale: WO 2018/172636

(56) Documents cités:
- EP-A1- 0 996 212
- EP-A1- 1 780 878
- EP-A1- 2 333 935
- EP-A1- 2 773 023
- FR-A- 1 475 501
- FR-A1- 2 996 378
- JP-A- H10 121 236
- JP-A- 2015 202 514
- US-A1- 2013 146 453

## Description

La présente invention concerne un actionneur électromagnétique comportant une ou plusieurs structures d'aimant à plusieurs aimants unitaires sous forme de plots. La présente invention trouve une application avantageuse mais non limitative pour un actionneur électromagnétique délivrant une forte puissance avec une vitesse de rotation du rotor élevée, ce qui est obtenu par l'utilisation d'une ou de structures d'aimant selon la présente invention. Un tel actionneur électromagnétique peut être utilisé par exemple dans un véhicule automobile totalement électrique ou hybride.

L'actionneur est un actionneur rotatif pouvant comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement de l'actionneur électromagnétique pour un rendement optimal, mais également une très bonne tenue mécanique de la partie tournante, c'est-à-dire le rotor, afin d'améliorer la fiabilité du système.

Dans des applications à haute vitesse, il est nécessaire de réduire les pertes pour un rendement optimal. Dans des applications automobiles, la miniaturisation est de plus en plus recherchée. Pour cela, il est important d'avoir un système compact rendu possible par la réduction de la masse et de l'encombrement de l'actionneur, mais également une très bonne tenue mécanique de la partie en déplacement, afin d'améliorer la fiabilité du système.

Le rotor comporte un corps sous forme d'un disque présentant deux faces circulaires reliées par une épaisseur, le disque étant délimité entre une couronne externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator, une seule face circulaire du corps porte des aimants tandis que, pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour une machine électromagnétique à flux axial et un flux radial pour une machine à flux radial.

Pour un moteur à forte puissance, le rotor tourne à des vitesses de rotation élevées. Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Le document US-A-2011/0285237 divulgue un moteur à entrefer axial. Le but de ce document est une simplification des étapes de fabrication du rotor tout en empêchant les aimants permanents portés par ce rotor d'être déplacés ou desserrés lors du montage et du fonctionnement du rotor. Les aimants sont logés dans une structure monopièce faite d'une pièce moulée enserrant les aimants.

La pièce moulée présente des rainures séparant les aimants dans lesquelles sont introduites des nervures portées par un corps du rotor, permettant de bloquer la pièce moulée contre un mouvement de déplacement axial. Un maintien radial de la pièce moulée est effectué par des éléments concentriques interne et externe à la pièce moulée.

Ce document se destine donc à des aimants logés dans une pièce moulée et n'est d'aucun enseignement pour les aimants se trouvant séparés les uns des autres. De plus, les nervures ne maintiennent les aimants que par leur action sur la pièce moulée et n'agissent donc pas directement pour le maintien des aimants dans le rotor.

Le document FR-A-1 475 501 décrit des pôles d'aimants permanents pour système d'aimants permanents constitués d'un faisceau d'aimants droits de section ronde ou polygonale, les aimants étant assemblés en un bloc de pôles au moyen de résine à couler ou d'autres matières synthétiques.

Le pôle d'aimants permanents assimilable à une structure d'aimants unitaires n'est cependant pas stable à haute vitesse de rotation, les aimants permanents étant seulement maintenus individuellement par de la résine à couler. Il n'y a pas de protection de la structure d'aimant en un tout.

Le document JP-A-H10 121236 décrit une structure d'aimant en trois dimensions constituée d'une pluralité d'aimants unitaires. Chaque aimant unitaire est sous la forme d'un plot allongé présentant une longueur s'étendant selon l'épaisseur de la structure, le plot allongé étant cylindrique et présentant une ligne d'aimantation s'étendant selon sa longueur. Les aimants unitaires sont positionnés dans la structure à distance les uns des autres afin d'être isolés électriquement les uns par rapport aux autres, la longueur de chaque plot étant supérieure au diamètre de la face longitudinale plane pour un plot cylindrique.

Dans ce document, il n'est pas décrit de moyen de renforcement de la structure ainsi formée qui puisse la protéger contre des vitesses de rotation élevées et empêcher le décrochement des aimants unitaires.

Le document EP-A-2 773 023 montre un rotor comprenant des aimants et des éléments de maintien enrobés ensemble dans une couche de composite. Cependant la tenue d'un tel rotor laisse à désirer, étant donné que chaque aimant n'est pas enrobé individuellement dans une couche de composite. D'autre part, il n'y a pas de disque de recouvrement décrit dans ce document pouvant maintenir axialement les aimants.

Le document FR-A-2 996 378 est considéré comme l'état de la technique le plus proche en reprenant les caractéristiques du préambule de la revendication 1 concernant un actionneur électromagnétique rotatif à flux axial. Ce document montre que des pièces polaires comportent en particulier des cadres dans lesquels est logée une pluralité d'aimants segmentés.

La tenue des aimants segmentés à l'intérieur des cadres est réalisée par collage des aimants segmentés les uns aux autres et aux bords intérieurs des cadres. Ce document n'a cependant jamais évoqué une encapsulation au moyen d'une couche de composite des aimants unitaires segmentés sans l'interposition locale d'un cadre entre la couche de composite et les aimants unitaires. La présence d'un cadre prend de la place sur le rotor, place qui aurait dû servir à un remplissage d'aimants unitaires supplémentaires, d'où une perte de puissance de l'actionneur électromagnétique.

Le problème à la base de la présente invention est de concevoir un actionneur électromagnétique qui puisse supporter des vitesses de travail élevées tout en fournissant un champ magnétique puissant.

Ce problème est résolu, pour un actionneur électromagnétique présentant les caractéristiques du préambule de la revendication 1, par les caractéristiques de la partie caractérisante de la revendication 1.

Les revendications dépendantes 2 à 13 décrivent des modes de réalisation optionnelle de l'actionneur électromagnétique selon la présente invention tandis que la revendication 14 de procédé permet de fabriquer une structure d'aimant faisant partie d'un actionneur électromagnétique résolvant le problème de la présente invention.

Comme il va être ci-après développé, les structures d'aimant forment des pôles magnétiques ou la structure d'aimant forme un aimant complet. Dans le cas de pôles d'aimantation, ceux-ci sont maintenus espacés les uns des autres par des branches. Le rotor pour un actionneur électromagnétique tournant est aussi en matériau composite renforcé de fibres. Dans le cas de pôles magnétiques, des branches peuvent séparer deux pôles adjacents.

La surface de travail de la structure d'aimant est celle qui va être en vis-à-vis des bobines du stator pour un actionneur électromagnétique tournant et de laquelle surface part le champ magnétique.

Selon sa définition la plus classique, un polyèdre est une forme géométrique à trois dimensions ayant des faces planes polygonales qui se rencontrent selon des segments de droite qu'on appelle arêtes, par exemple un prisme droit ou oblique, un cube ou une pyramide. Dans le cadre de la présente invention, Il est préféré avoir un polyèdre présentant deux surfaces polygonales longitudinales opposées, planes et égales reliées par des arrêtes droites et parallèles tel un polyèdre hexagonal mais ceci n'est pas limitatif, une seule surface longitudinale pouvant être présente, un sommet étant porté par l'autre extrémité du polyèdre.

Ceci permet d'avoir une structure d'aimant présentant de nombreux plots formant des aimants unitaires. Il s'est révélé qu'une structure avec une telle pluralité d'aimants unitaires avait un grand pouvoir d'aimantation tout en présentant une grande résistance, la structure d'aimant présentant une couche de préférence en composite pour l'enrobage des aimants unitaires. Une telle structure d'aimant forme ainsi un pôle d'aimant ou être un aimant complet dans un actionneur électromagnétique selon la présente invention.

Un des avantages de la présente invention est de décomposer une structure d'aimant pouvant être un aimant entier ou un pôle magnétique selon l'état de la technique en une pluralité de petits ou micro-aimants. Un gros aimant est sujet à des pertes par courants de Foucault plus importantes que son équivalent en petits ou micro-aimants. L'utilisation de petits aimants ou de micro-aimants permet donc de réduire ces pertes qui sont préjudiciables au fonctionnement de l'actionneur électromagnétique.

Il est connu que pour obtenir un champ magnétique d'intensité optimale, le volume idéal d'un aimant doit s'approcher d'un cube ou d'un cylindre dont la longueur est égale au diamètre. Il est de connaissance courante qu'augmenter la longueur d'un aimant au-delà n'apporte aucune augmentation du champ magnétique. La démarche de la présente invention va cependant dans le sens contraire de ce préjugé.

La longueur d'un aimant unitaire est sensiblement augmentée par rapport au diamètre ou à une diagonale de sa face longitudinale plane que ne le propose la pratique largement répandue, ceci essentiellement pour répondre à des besoins de résistance mécanique de la structure.

Selon l'invention, il a été découvert qu'une pluralité d'aimants unitaires dans une structure d'aimant d'un actionneur électromagnétique donne une structure d'aimant présentant une résistance mécanique beaucoup plus importante tout en gardant des propriétés magnétiques quasi similaires à celles d'un aimant seul ayant une surface égale à n fois la surface élémentaire des n aimants unitaires quand n aimants unitaires sont présents.

La couche de composite non conductrice enrobant les aimants unitaires et la totalité de la structure aimantée permet de solidifier l'ensemble. Le composite est préféré au fer pour ne pas induire de couple de détente ou de pertes supplémentaires.

De plus, la résistance mécanique d'une couche de composite est élevée et l'enrobage se fait aisément notamment par injection du composite sur une disposition d'aimants unitaires maintenus en place les uns par rapport aux autres par un moyen quelconque. Il n'y a donc pas de risque de détachement des aimants à vitesses de rotation élevées. Le fait d'avoir un rapport d'une surface de la face longitudinale du plot sur la surface de travail de la structure est inférieur à 2% permet d'avoir un nombre très élevé de plots sur la face longitudinale du plot, la place prise par un plot sur la surface de travail de la structure étant très réduite.

Les fibres de renforcement de la couche de composite concourent à augmenter la résistance de la structure d'aimant et notamment la rigidité à la flexion et au flambement.

Quand utilisé, un maillage reste en place en étant aussi enrobé dans la couche de composite. Un tel maillage permet de maintenir des aimants unitaires lors de la fabrication de la structure d'aimant et présente l'avantage de représenter un élément de solidification supplémentaire de la structure d'aimant, le maillage pouvant contenir aussi des fibres de renforcement.

Quand le maillage est sous forme d'un nid d'abeille, ceci renforce la résistance d'une structure d'aimant. Les aimants unitaires sont insérés dans des logements hexagonaux qui assurent leur maintien. Les parois des logements servent d'isolant électrique et la densité des logements dans la structure d'aimant peut être considérablement augmentée. Le maillage en nid d'abeille peut être en matériau composite isolant renforcé de fibres.

Quand chaque aimant unitaire est collé dans un logement respectif par une résine renforcée de fibres, la couche d'enrobage en composite, le maillage entourant les aimants unitaires et les moyens de collage des aimants dans le maillage peuvent être tous les trois renforcés par des fibres. La structure d'aimant ainsi obtenue, faisant partie de l'actionneur électromagnétique à flux axial selon l'invention, présente des caractéristiques mécaniques de résistance à la rupture très élevées.

Quand une structure d'aimant faisant partie de l'actionneur électromagnétique à flux axial selon l'invention comprend un empilement de deux séries d'aimants unitaires, chaque paire de deux aimants unitaires de séries différentes collés bout à bout par affinité magnétique se comporte comme un aimant simple plus long.

Quand la structure faisant partie de l'actionneur électromagnétique à flux axial selon l'invention comprend un empilement de deux séries d'au moins deux aimants unitaires, les deux séries étant empilées l'une sur l'autre, une couche de composite étant intercalée entre les deux séries empilées, ceci permet d'avoir une structure pouvant présenter une surface de travail sur deux faces opposées de la structure, cette structure d'aimant pouvant servir dans un actionneur électromagnétique sur un rotor encadré par deux stators.

Quand un matériau monocouche ou multicouches est introduit dans l'espace entre le logement et l'aimant unitaire d'une structure faisant partie de l'actionneur électromagnétique à flux axial selon l'invention, ce matériau peut être un plastique, un composite un matériau métallique d'enrobage des aimants unitaires comme du nickel ou du cuivre. Le matériau peut avoir été déposé sur l'aimant unitaire préalablement à son introduction dans le maillage en étant par exemple un matériau de revêtement ou peut avoir une action de solidarisation de l'aimant unitaire avec la maille qui le reçoit.

Pour le procédé de fabrication d'une structure d'aimant faisant partie de l'actionneur électromagnétique à flux axial selon l'invention, du fait d'une découpe dans trois dimensions et notamment en largeur et en longueur de la tuile, il s'est avéré que les aimants unitaires de la structure avaient des propriétés magnétiques améliorées par rapport aux propriétés d'une portion comparable de la tuile magnétique.

Le positionnement des aimants unitaires peut se faire par réception des aimants dans un maillage, auquel cas le maillage fait partie de la structure d'aimant en étant enrobé dans la couche de composite. Alternativement, le positionnement peut se faire à l'extérieur d'une ébauche de la structure d'aimant et ne pas appartenir à la structure d'aimant enrobée finale.

Avantageusement, le positionnement s'effectue par introduction des aimants unitaires dans un maillage et injection de la couche de composite autour du maillage. Ceci est la forme préférée de réalisation du procédé selon l'invention, le maillage demeurant dans la structure d'aimant après enrobage par la couche de composite, le maillage étant avantageusement en nid d'abeille.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1a est une représentation schématique d'une vue d'une face d'un rotor faisant partie d'un actionneur électromagnétique à flux axial selon une première forme de réalisation de la présente invention,
- la figure 1b est une représentation schématique d'une vue agrandie de la partie cerclée référencée A à la figure 1 a,
- la figure 1c est une représentation schématique d'une vue agrandie d'une structure d'aimant composée du maillage et d'aimants unitaires, la structure faisant partie de l'actionneur électromagnétique à flux axial selon l'invention,
- la figure 2a est une représentation schématique d'une vue en éclaté d'un premier mode de réalisation d'un rotor faisant partie d'un actionneur électromagnétique à flux axial selon la présente invention,
- la figure 2b est une représentation schématique d'une vue en éclaté d'un deuxième mode de réalisation d'un rotor faisant partie d'un actionneur électromagnétique à flux axial selon la présente invention,
- la figure 3 est une représentation schématique d'une vue en éclaté d'un mode de réalisation d'un actionneur électromagnétique à flux radial, n'entrant pas dans le cadre de la présente invention,
- la figure 4 est une représentation schématique d'une vue en perspective d'un plot faisant office d'aimant unitaire dans une structure d'aimant faisant partie d'un actionneur électromagnétique à flux axial selon la présente invention,
- les figures 5a et 5b sont des représentations schématiques de vues de dessus respectivement d'une structure d'aimant faisant partie d'un actionneur électromagnétique à flux axial selon la présente invention, la structure formant un unique aimant et d'un agrandissement d'une portion de cette structure d'aimant,
- les figures 6a et 6b sont des représentations schématiques respectivement d'une vue en perspective et d'une vue latérale d'un nid d'abeille pouvant réaliser le maillage entourant les plots formant des aimants unitaires dans une structure d'aimant faisant partie d'un actionneur électromagnétique à flux axial selon la présente invention.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

Quand il est fait référence à une structure d'aimant comprenant des aimants unitaires, cette structure d'aimant fait toujours partie d'un actionneur électromagnétique selon la présente invention.

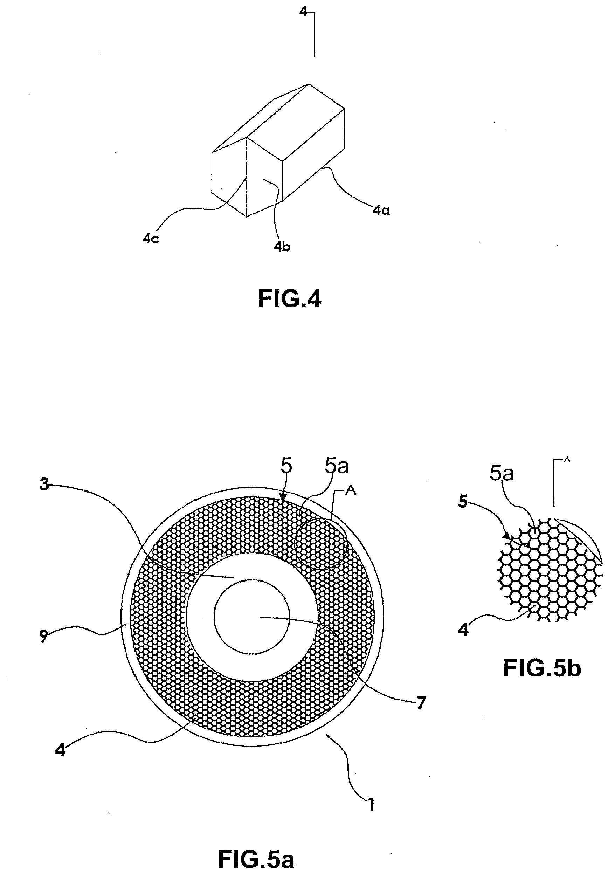

En se référant à toutes les figures et notamment aux figures 4, 5a, 5b, 6a et 6b en se reportant aussi aux autres figures pour les références manquantes à ces premières figures, la présente invention concerne une structure d'aimant 6 faisant partie d'un actionneur électromagnétique à flux axial selon la présente invention. Cette structure d'aimant 6 est en trois dimensions constituée d'une pluralité d'aimants unitaires 4. La structure d'aimant 6 peut être sous la forme d'un pavé présentant une largeur, une longueur et une épaisseur, l'épaisseur formant la dimension la plus petite de la structure d'aimant 6.

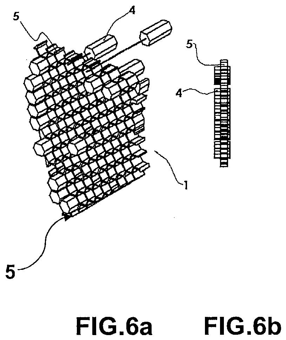

Dans un actionneur électromagnétique à flux axial selon la présente invention, chaque aimant unitaire 4 est sous la forme d'un plot 4 allongé, visible notamment à la figure 4, en présentant une longueur 4a s'étendant selon l'épaisseur de la structure d'aimant 6, comme il peut être vu aux figures 6a et 6b. Le plot 4 allongé est cylindrique ou sous la forme d'un polyèdre avec au moins une face longitudinale 4b plane orientée vers une surface de travail de la structure d'aimant 6 qui est la surface en vis à vis des bobinages dans un actionneur électromagnétique rotatif à flux axial.

Le plot 4 allongé présente une ligne d'aimantation s'étendant approximativement selon sa longueur, les aimants unitaires 4 étant positionnés dans la structure d'aimant 6 à distance les uns des autres afin d'être isolés électriquement les uns par rapport aux autres.

La longueur 4a de chaque plot 4 est supérieure au diamètre de la face longitudinale plane pour un plot cylindrique, ce qui n'est pas montré aux figures ou à une plus grande diagonale 4c reliant deux sommets de ladite face longitudinale 4b pour un plot 4 en forme de polyèdre. Pour une face longitudinale 4b régulière comme un hexagone, toutes les diagonales 4c sont équivalentes.

De plus, un rapport d'une surface de la face longitudinale 4b du plot 4 sur la surface de travail totale de la structure d'aimant 6 peut être inférieur à 2%, ce qui montre qu'un aimant unitaire 4 tient très peu de place sur la surface de travail totale de la structure d'aimant 6. Ceci permet d'avoir un nombre très élevé de plots 4sur la face longitudinale 4b du plot 4.

Comme montré à la figure 4, chaque plot 4 formant un aimant unitaire 4 présente sa face longitudinale 4b plane de forme hexagonale. Ceci permet par exemple d'insérer chaque plot 4 dans une cavité d'un nid d'abeille en tant que maillage 5a.

La structure d'aimant 6 faisant partie d'un actionneur électromagnétique à flux axial selon la présente invention comporte une couche de composite non conductrice enrobant les aimants unitaires 4. Tout le contour de la structure d'aimant 6 peut être délimité par cette couche composite.

Le composite préférentiellement ne contient pas de fer pour ne pas induire de couple de détente ou de pertes supplémentaires.

La couche de composite comprend des fibres de renforcement comme des fibres de verre ou des fibres en matière plastique, par exemple en kevlar ou en polyamide ou toute matière plastique augmentant la résistance mécanique de l'ensemble.

Dans un mode préférentiel très avantageux, la structure d'aimant 6 peut comprendre au moins un maillage 5a comportant une pluralité de logements 5 ou alvéole pour un aimant unitaire 4 respectif.

Le maillage 5a, quand présent, peut rester en place en étant aussi enrobé dans la couche de composite. Le maillage 5a peut contenir aussi des fibres de renforcement.

Avantageusement, ledit au moins un maillage 5a est sous forme d'un nid d'abeille présentant des logements 5 de section hexagonale, ce qui renforce la résistance mécanique de la structure d'aimant 6. Ceci peut être vu aux figures 6a et 6b.

Un maillage 5a pris isolément de la structure d'aimant 6 est montré aux figures 6a et 6b. Les logements 5 ou alvéoles n'entourent pas leur plot 4 associé sur toute sa longueur.

Chaque aimant unitaire 4 est collé dans un logement 5 respectif par une résine renforcée de fibres. Par exemple, sans que cela soit limitatif les aimants unitaires 4 peuvent être des aimants néodyme fer bore ou samarium cobalt ou tout autre type d'aimants. Les aimants en néodyme sont sensibles aux chocs et à la torsion et peuvent facilement s'enflammer. En diminuant leurs dimensions par division, la présente invention permet d'éviter tous ces risques et notamment les risques de casse des aimants.

Ainsi, dans le cadre d'une réalisation préférentielle de l'invention, la couche d'enrobage en composite, le maillage 5a entourant les aimants unitaires 4 et les moyens de collage des aimants dans le maillage 5a peuvent être tous les trois renforcés par des fibres. La structure d'aimant 6 ainsi obtenue présente des caractéristiques mécaniques de résistance à la rupture très élevées.

Dans un premier mode de réalisation préférentielle non montrée aux figures, la structure d'aimant 6 faisant partie d'un actionneur électromagnétique à flux axial selon la présente invention peut comprendre un empilement de deux séries d'aimants unitaires 4, chaque aimant unitaire 4 d'une série étant aligné dans le sens de sa longueur avec un aimant unitaire 4 respectif de l'autre série en étant mis bout à bout. Chaque paire de deux aimants unitaires de séries différentes collés bout à bout par affinité magnétique peut se comporter comme un aimant simple plus long.

Dans un deuxième mode de réalisation préférentielle non montrée aux figures, la structure d'aimant 6 faisant partie d'un actionneur électromagnétique à flux axial selon la présente invention peut comprendre un empilement de deux séries d'au moins deux aimants unitaires 4, les deux séries étant empilées l'une sur l'autre, une couche de composite étant intercalée entre les deux séries empilées. Les deux séries empilées sont ainsi isolées électriquement l'une de l'autre.

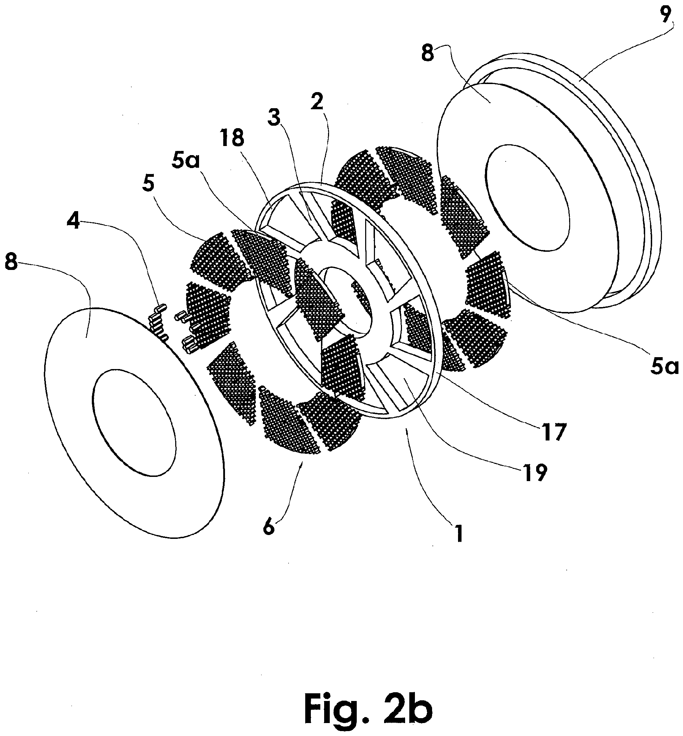

Ceci permet d'avoir une structure d'aimant 6 pouvant présenter une surface de travail sur deux faces opposées de la structure d'aimant 6, cette structure d'aimant 6 pouvant par exemple servir dans un actionneur électromagnétique tournant pour un rotor 1, 1a encadré par deux stators. Par exemple à la figure 2b les deux séries d'aimants unitaires 4 de chaque structure d'aimant 6 dont une seule est référencée 6 à cette figure peuvent former des structures d'aimant 6 à deux séries d'aimants enrobées dans la même couche composite, une série étant isolée électriquement par rapport à l'autre série.

De ce fait, la présente invention concerne un actionneur électromagnétique rotatif à flux axial. L'actionneur électromagnétique comprend une telle structure d'aimant 6 unitaire ou plusieurs structures d'aimant 6, auquel cas pouvant être séparées les unes des autres par des branches 3.

La ou les structures d'aimant 6 font partie d'un rotor 1, 1a tournant autour de son centre, la ou les structures d'aimant 6 étant alors disposées concentriquement au rotor 1, 1a.

Le rotor 1, 1a peut aussi être en matériau composite renforcé de fibres.

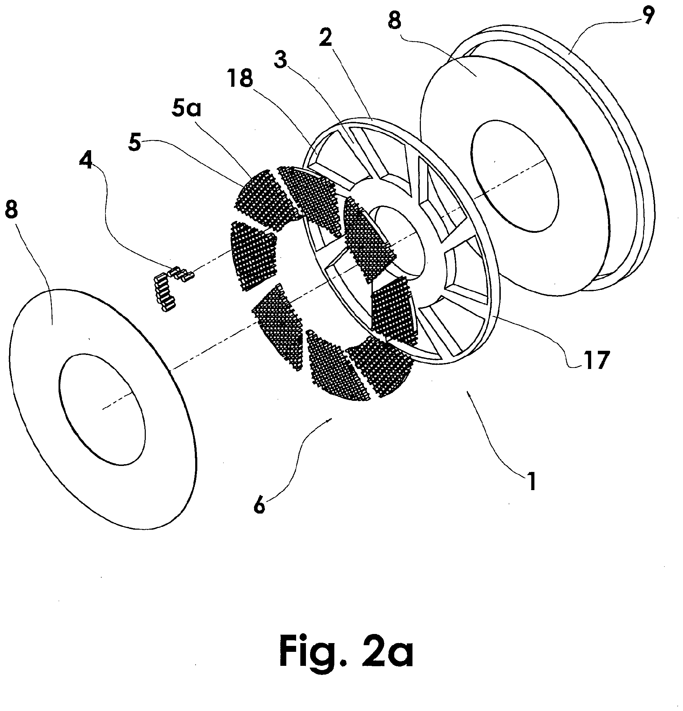

Avantageusement, quand unitaire, la structure d'aimant 6 forme un unique aimant s'étendant sur l'actionneur. Ceci est montré à la figure 5a. Quand multiples, les structures d'aimant 6 sont des pavés successifs formant des pôles d'aimant successifs alternés. Ceci est montré notamment à la figure 2a.

L'invention concerne aussi un procédé de fabrication d'une telle structure d'aimant 6 faisant partie d'un actionneur électromagnétique à flux axial selon la présente invention.

Le procédé comprend une étape de découpe dans une tuile aimantée présentant une longueur, une largeur et une épaisseur formant trois dimensions de la tuile, de plusieurs aimants unitaires 4 selon les trois dimensions de la tuile aimantée.

L'étape suivante est une étape de positionnement et maintien des aimants unitaires 4 à distance les uns des autres pour les isoler électriquement,

L'étape finale est une étape d'injection d'une couche de composite autour des aimants unitaires 4 pour leur enrobage et d'un maillage 5a. Le positionnement se fait par réception des aimants dans un maillage 5a auquel cas le maillage 5a fait partie de la structure d'aimant 6 en étant enrobé dans la couche de composite.

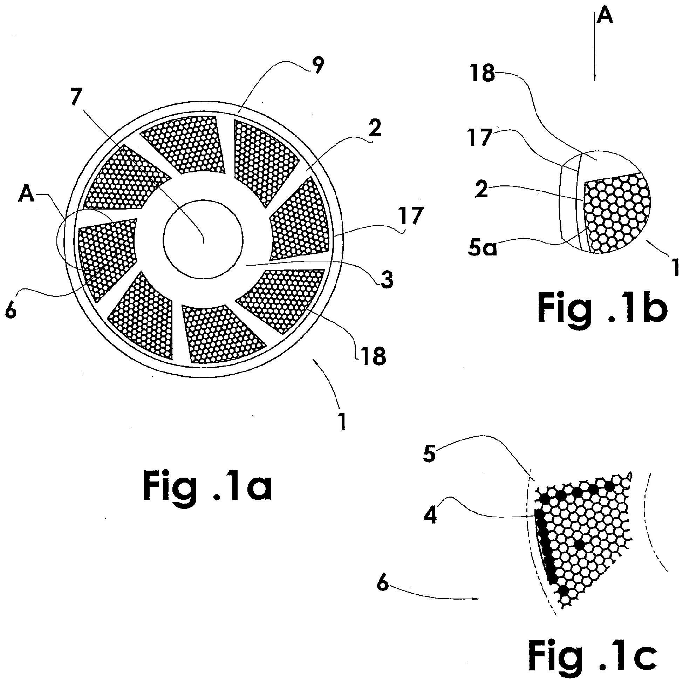

En se référant aux figures 1a à 1c, 2a, 2b, il est montré un rotor 1, 1a d'un moteur ou d'un générateur électromagnétique à flux axial présentant au moins un support 2, 2a logeant une pluralité d'aimants unitaires 4. Il peut par exemple y avoir un support 2, 2a de chaque côté du rotor ou à l'intérieur du rotor, selon que le rotor est à flux axial ou à flux radial.

Ledit au moins un support 2, 2a comporte des branches 3, 3a délimitant entre elles des cavités recevant chacun une structure d'aimant 6 respective pouvant être composée d'un maillage 5a comprenant des logements ou alvéoles 5 et des aimants unitaires 4, chaque aimant unitaire 4 étant inséré dans un logement ou alvéole 5 respectif, la structure d'aimant 6 formant un pôle aimant ou un aimant entier. La figure 1c montre une vue agrandie par rapport à la figure 1a d'une telle structure d'aimant 6.

Un des avantages de l'actionneur électromagnétique à flux axial selon la présente invention est de remplacer un ou plusieurs aimants de taille importante par une pluralité de petits aimants unitaires 4 dans une ou des structures d'aimant contenues dans l'actionneur électromagnétique. Il y a donc une création de flux magnétique par une multitude de petits aimants unitaires 4 dont le nombre est d'au moins 20 et peut dépasser 100, voire nettement plus par structure d'aimant. Un rotor de l'état de la technique pouvait comprendre de 1 à 5 aimants alors que la présente invention prévoit beaucoup plus d'aimants unitaires 4 de petite taille.

Les petits aimants unitaires 4 peuvent être insérés dans des logements ou alvéoles 5 respectives par un robot. Pour un rotor de taille moyenne, les petits aimants unitaires 4 dans le cadre de la présente invention peuvent avoir une dimension de 4 millimètres.

Dans une forme de réalisation n'entrant pas dans le cadre de la présente invention, le rotor fait partie d'un actionneur électromagnétique à flux radial, donc destiné à un moteur ou génératrice à flux radial. Dans cette forme de réalisation, ledit au moins un support 2a est de forme cylindrique en comportant des branches 3a.

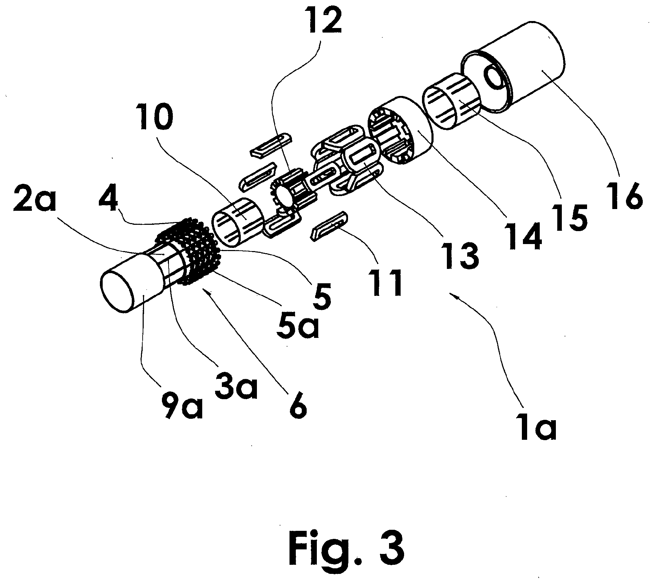

Dans le mode de réalisation montré à la figure 3, non objet de la présente invention, qui montre un actionneur électromagnétique à flux radial avec deux stators et un rotor 1a, le rotor 1a à flux radial de forme cylindrique présente un support cylindrique 2a présentant des branches de séparation 3a qui peuvent s'étendre axialement sur le support cylindrique 2a.

Les branches de séparation 3a délimitent axialement des structures d'aimant 6 composées du maillage 5a et des aimants unitaires 4. Il se peut que le support cylindrique 2a soit creusé entre les branches de séparation 3a pour recevoir les structures d'aimant 6 composées du maillage alvéolaire 5a et des aimants unitaires 4.

Une frette 9a recouvre une extrémité du rotor 1a à proximité du support cylindrique 2a. A l'intérieur du support cylindrique 2a est inséré un cylindre de recouvrement intérieur 10 et à l'extérieur du support cylindrique 2a sur la périphérie externe du support cylindrique 2a s'étend un cylindre de recouvrement extérieur 15.

Un premier stator est disposé à l'intérieur du rotor 1a en présentant un circuit magnétique interne 12 portant des bobines 11. Le recouvrement intérieur 10 recouvre le circuit magnétique interne 12.

Un deuxième stator est disposé à l'extérieur du rotor 1a en l'entourant en présentant un circuit magnétique externe 14 intégrant en son intérieur des bobines 13. Le recouvrement extérieur 15 est disposé entre les bobines 13 et le circuit magnétique externe 14. Un carter 16 recouvre l'ensemble du rotor 1a et des deux stators.

Le rotor faisant partie d'un actionneur électromagnétique selon la présente invention est à flux axial, donc destiné à un moteur ou génératrice à flux axial.

Ledit au moins un support 2, 2a est de forme discoïdale et partiellement creux en comportant des branches 3, 3a s'étendant sensiblement radialement ou inclinées en direction radiale entre un pourtour interne 18, délimitant intérieurement un passage pour un arbre de rotation du rotor 1, et une couronne externe 17 du support 2, 2a formant la couronne externe du support 2, 2a. Ceci est montré aux figures 1a, 1b, 2a et 2b.

Les branches 3, 3a peuvent être inclinées par rapport à l'arbre de rotation du rotor comme le sont des pales d'hélice et avoir une largeur grandissante plus on s'éloigne du centre du support.

Le pourtour externe peut présenter des bords radialement recourbés vers l'intérieur du support 2 afin de former des butées axiales pour des portions d'extrémité de structures d'aimant 6 composées du maillage alvéolaire et des aimants unitaires introduites dans le pourtour externe 17.

Dans cette forme de réalisation selon l'invention, ledit au moins un support discoïdal 2a est recouvert sur au moins une face par un disque de recouvrement 8 en tant que moyens de maintien axial de consolidation du rotor. Ceci peut se faire sur les deux faces opposées par un disque de recouvrement 8 respectif.

Dans cette forme de réalisation de l'actionneur électromagnétique à flux axial selon la présente invention, le rotor 1, 1a peut présenter une couronne externe périphérique formant sa tranche, une frette 9 étant réalisée sur la couronne externe 17 périphérique en permettant de retenir les aimants unitaires 4 contre une force centrifuge.

Dans cette forme de réalisation, chaque structure d'aimant 6 composée des aimants unitaires 4 et éventuellement d'un maillage 5a pouvant comprendre des logements ou alvéoles 5 traversantes ou non sur chaque face du support discoïdal 2a. Chacun des aimants unitaires 4 logés dans un logement ou alvéole 5 respective peut donc déboucher sur chaque face du support discoïdal 2a.

A la figure 2a, il est montré des branches 3 de séparation de deux structures d'aimant 6 adjacentes.

Comme il est visible à la figure 2b, au moins deux structures d'aimant 6 composées d'un maillage 5a et d'aimants unitaires 4 formant sensiblement une couronne peuvent être séparées par une paroi 19 au milieu du support de forme discoïdal 2. Les structures d'aimant 6 peuvent être des disques monopièces ou séparées par les branches 3a.

Les structures d'aimant 6, faisant partie d'un actionneur électromagnétique à flux axial selon la présente invention, composées chacune du maillage 5a et des aimants unitaires 4 peuvent être solidarisées audit au moins un support 2, 2a par des moyens de solidarisation à base de matériaux ferreux, de matériaux synthétiques ou composites.

Les moyens de solidarisation peuvent faire partie intégrante du rotor et/ou peuvent être des pièces rapportées solidaires du rotor. Les pièces rapportées peuvent être soudées, vissées, rivetées ou encliquetées avec le rotor 1, 1a. Il est possible de prévoir des moyens de solidarisation entre chaque aimant unitaire 4 et le logement ou alvéole 5 le recevant, ceci sur la face interne au logement ou alvéole 5 des parois de séparation 19 qui la délimite par rapport à des logements ou alvéoles 5 adjacents.

Dans chaque structure d'aimant 6 composée du maillage alvéolaire 5a et des aimants unitaires 4, les logements ou alvéoles 5 peuvent être délimités par des parois de séparation 19, chaque aimant unitaire 4 étant solidarisé dans son logement ou alvéole 5 respective par de la résine, de la colle ou par soudage.

Les aimants unitaires 4 et leurs logements ou alvéoles 5 respectives peuvent être de forme variable avec leurs pôles orientés dans des directions parallèles ou divergentes. Par exemple, les dimensions des logements ou alvéoles 5 peuvent différer d'un logement ou alvéole 5 à une autre. Les logements ou alvéoles 5 peuvent ne pas être obligatoirement de forme hexagonale bien que cela soit préféré.

L'actionneur électromagnétique à flux axial selon la présente invention peut comprendre au moins un stator portant au moins un bobinage, le moteur ou la génératrice électromagnétique comprenant un ou plusieurs entrefers entre ledit au moins un rotor et ledit au moins un stator, d'un ou plusieurs stators portant le bobinage.

Chaque stator peut comporter un circuit magnétique associé à un bobinage. Le stator peut présenter des dents ou des encoches ouvertes ou fermées. Une carcasse permet de protéger le moteur ou la génératrice électromagnétique. Les stators pouvant être connectés en série ou en parallèle. Le décalage d'un stator d'un angle l'un par rapport à l'autre, combiné à la forme des encoches et à la forme des aimants unitaires 4, permet de réduire la variation de couple et le couple de détente.

L'actionneur pouvant être un moteur ou une génératrice électromagnétique à flux axial peut fonctionner à des vitesses très élevées avec ou sans multiplicateur de vitesses. Le moteur ou la génératrice peut comprendre au moins deux stators connectés en série ou en parallèle ou au moins deux rotors.

Le rotor comprend un arbre de rotation s'étendant perpendiculairement aux faces circulaires du rotor 1, 1a en traversant les deux stators. Le rotor 1, 1a peut être porté par au moins deux roulements, avec un roulement associé à un stator respectif pour permettre sa rotation par rapport aux stators.

## Revendications

1. Actionneur électromagnétique rotatif à flux axial, comprenant au moins une structure d'aimant constituée d'aimants unitaires (4) multiples, ladite au moins une structure d'aimant (6) formant un pavé successif en tant que pôle d'aimant et étant logée dans au moins un support (2) faisant partie d'un rotor (1) de forme discoïdale partiellement creux, ladite au moins une structure d'aimant (6) présentant une épaisseur formant sa dimension la plus petite, chaque aimant unitaire étant sous la forme d'un plot (4) allongé présentant une longueur (4a) s'étendant selon une épaisseur de ladite au moins une structure d'aimant (6), le plot (4) allongé étant cylindrique ou sous la forme d'un polyèdre avec au moins une face longitudinale (4b) plane orientée vers une surface de travail de ladite au moins une structure d'aimant (6), le plot (4) allongé présentant une ligne d'aimantation s'étendant selon sa longueur, les aimants unitaires (4) étant positionnés dans ladite au moins une structure d'aimant (6) à distance les uns des autres afin d'être isolés électriquement les uns par rapport aux autres, ladite au moins une structure d'aimant (6) comportant une couche de composite non conductrice enrobant les aimants unitaires (4), la couche de composite délimitant tout un contour extérieur de ladite au moins une structure d'aimant (6), **caractérisé en ce que** la longueur (4a) de chaque plot (4) est supérieure au diamètre de la face longitudinale plane pour un plot cylindrique ou à une plus grande diagonale (4c) reliant deux sommets de ladite face longitudinale (4b) pour un plot (4) en forme de polyèdre, ledit au moins un support (2) étant recouvert sur au moins une face par un disque de recouvrement (8) en tant que moyens de maintien axial de consolidation du rotor (1).

2. Actionneur électromagnétique selon la revendication 1, dans lequel, quand unitaire, ladite au moins une structure d'aimant (6) forme un unique aimant s'étendant sur l'actionneur ou, quand multiples, les structures d'aimant (6) sont des pavés successifs formant des pôles d'aimant successifs alternés.

3. Actionneur électromagnétique selon la revendication 2, dans lequel les structures d'aimant (6) sont multiples et logées dans ledit au moins un support (2) comportant des branches (3, 3a) délimitant entre elles des logements recevant chacun une structure d'aimant (6) respective, les branches (3) s'étendant sensiblement radialement ou inclinées en direction radiale du rotor (1).

4. Actionneur électromagnétique selon la revendication précédente, dans lequel le rotor (1) présente une couronne externe (17) périphérique formant sa tranche, une frette (9) étant réalisée sur la couronne externe (17) périphérique en permettant de retenir les structures d'aimant (6).

5. Actionneur électromagnétique selon l'une quelconque des revendications précédentes, dans lequel un rapport d'une surface de la face longitudinale (4b) du plot (4) sur la surface de travail de ladite au moins une structure d'aimant (6) est inférieur à 2%.

6. Actionneur électromagnétique selon l'une quelconque des revendications précédentes, dans lequel chaque plot (4) présente sa face longitudinale (4b) plane de forme hexagonale.

7. Actionneur électromagnétique selon l'une quelconque des revendications précédentes, dans lequel la couche de composite comprend des fibres de renforcement comme des fibres de verre ou des fibres en matière plastique.

8. Actionneur électromagnétique selon l'une quelconque des revendications précédentes, dans lequel ladite au moins une structure d'aimant (6) comprend au moins un maillage (5a) comportant une pluralité de logements (5) pour un aimant unitaire (4) respectif.

9. Actionneur électromagnétique selon la revendication précédente, dans lequel ledit au moins un maillage (5a) est sous forme d'un nid d'abeille présentant des logements (5) de section hexagonale.

10. Actionneur électromagnétique selon l'une quelconque des deux revendications précédentes, dans lequel chaque aimant unitaire (4) est collé dans un logement (5) respectif par une résine renforcée de fibres.

11. Actionneur électromagnétique selon l'une quelconque des revendications précédentes, lequel comprend un empilement de deux séries d'aimants unitaires (4), chaque aimant unitaire (4) d'une série étant aligné dans le sens de sa longueur avec un aimant unitaire (4) respectif de l'autre série en étant mis bout à bout.

12. Actionneur électromagnétique selon l'une quelconque des revendications précédentes, lequel comprend un empilement de deux séries d'au moins deux aimants unitaires (4), les deux séries étant empilées l'une sur l'autre, une couche de composite étant intercalée entre les deux séries empilées.

13. Actionneur électromagnétique selon l'une quelconque des revendications précédentes, dans lequel un matériau monocouche ou multicouches est introduit dans l'espace entre le logement (5) et l'aimant unitaire (4).

14. Procédé de fabrication d'une structure d'aimant (6) faisant partie d'un actionneur électromagnétique selon l'une quelconque des revendications 8 à 10, comprenant les étapes suivantes :
- découpe dans une tuile aimantée présentant une longueur, une largeur et une épaisseur formant trois dimensions de la tuile, de plusieurs aimants unitaires (4) selon les trois dimensions de la tuile aimantée,
- positionnement et maintien des aimants unitaires (4) à distance les uns des autres, le positionnement s'effectuant par introduction des aimants unitaires dans un maillage (5a) et injection d'une couche de composite autour des aimants unitaires (4) et autour du maillage (5a) pour leur enrobage, la couche de composite délimitant tout un contour extérieur de la structure d'aimant (6).

## Patentansprüche

1. Rotierender elektromagnetischer Aktuator mit Axialfluss, umfassend mindestens eine aus mehreren Einzelmagneten (4) gebildete Magnetstruktur, wobei die mindestens eine Magnetstruktur (6) einen aufeinanderfolgenden Klotz als Magnetpol bildet und in mindestens einem Halter (2) untergebracht ist, der Teil eines teilweise hohlen scheibenförmigen Rotors (1) ist, wobei die mindestens eine Magnetstruktur (6) eine Dicke aufweist, die ihre kleinste Abmessung bildet, wobei jeder Einzelmagnet in Form eines länglichen Blocks (4) vorliegt, der eine Länge (4a) aufweist, die sich gemäß einer Dicke der mindestens einen Magnetstruktur (6) erstreckt, wobei der längliche Block (4) zylindrisch ist oder in Form eines Poyleders mit mindestens einer ebenen länglichen Fläche (4b) vorliegt, die zu einer Arbeitsoberfläche der mindestens einen Magnetstruktur (6) zeigt, wobei der längliche Block (4) eine Magnetisierungslinie aufweist, die sich gemäß seiner Länge erstreckt, wobei die Einzelmagneten (4) in der mindestens einen Magnetstruktur (6) voneinander beabstandet positioniert sind, um im Verhältnis zueinander elektrisch isoliert zu sein, wobei die mindestens eine Magnetstruktur (6) eine nicht leitende Kompositschicht aufweist, die die Einzelmagneten (4) umhüllt, wobei die Kompositschicht eine gesamte Außenkontur der mindestens einen Magnetstruktur (6) begrenzt, **dadurch gekennzeichnet, dass** die Länge (4a) jedes Blocks (4) größer als der Durchmesser der ebenen länglichen Fläche für einen zylindrischen Block oder als eine größere Diagonale (4c) ist, die zwei Spitzen der länglichen Fläche (4b) für einen Block (4) in Polyederform verbindet, wobei der mindestens eine Halter (2) auf mindestens einer Fläche von einer Abdeckscheibe (8) als konsolidierendes axiales Haltemittel des Rotors (1) bedeckt ist.

2. Elektromagnetischer Aktuator nach Anspruch 1, wobei, wenn einzeln, die mindestens eine Magnetstruktur (6) einen einzigen Magneten bildet, der sich auf dem Aktuator erstreckt, oder, wenn mehrfach, die Magnetstrukturen (6) aufeinanderfolgende Klötze sind, die alternierende aufeinanderfolgende Magnetpole bilden.

3. Elektromagnetischer Aktuator nach Anspruch 2, wobei die Magnetstrukturen (6) mehrfach sind und in dem mindestens einen Halter (2) untergebracht sind, der Schenkel (3, 3a) aufweist, die zwischen sich Aufnahmen begrenzen, von denen jede eine jeweilige Magnetstruktur (6) aufnimmt, wobei sich die Schenkel (3) etwa radial oder geneigt in radialer Richtung des Rotors (1) erstrecken.

4. Elektromagnetischer Aktuator nach vorangehendem Anspruch, wobei der Rotor (1) einen peripheren äußeren Kranz (17) aufweist, der seine Kante bildet, wobei auf dem peripheren äußeren Kranz (17) ein Bundring (9) ausgebildet ist, der erlaubt, die Magnetstrukturen (6) zu halten.

5. Elektromagnetischer Aktuator nach einem der vorangehenden Ansprüche, wobei ein Verhältnis einer Oberfläche der länglichen Fläche (4b) des Blocks (4) zur Arbeitsoberfläche der mindestens einen Magnetstruktur (6) kleiner als 2 % ist.

6. Elektromagnetischer Aktuator nach einem der vorangehenden Ansprüche, wobei jeder Block (4) seine ebene länglichen Fläche (4b) in sechseckiger Form zeigt.

7. Elektromagnetischer Aktuator nach einem der vorangehenden Ansprüche, wobei die Kompositschicht Verstärkungsfasern wie Glasfasern oder Fasern aus Kunststoff umfasst.

8. Elektromagnetischer Aktuator nach einem der vorangehenden Ansprüche, wobei die mindestens eine Magnetstruktur (6) mindestens ein Maschenwerk (5a) umfasst, das eine Vielzahl von Aufnahmen (5) für einen jeweiligen Einzelmagneten (4) aufweist.

9. Elektromagnetischer Aktuator nach vorangehendem Anspruch, wobei das mindestens eine Maschenwerk (5a) in Form einer Bienenwabe vorliegt, die Aufnahmen (5) mit sechseckigem Querschnitt aufweist.

10. Elektromagnetischer Aktuator nach einem der zwei vorangehenden Ansprüche, wobei jeder Einzelmagnet (4) mit einem faserverstärkten Harz in einer jeweiligen Aufnahme (5) verklebt ist.

11. Elektromagnetischer Aktuator nach einem der vorangehenden Ansprüche, der einen Stapel aus zwei Reihen von Einzelmagneten (4) umfasst, wobei jeder Einzelmagnet (4) einer Reihe in Richtung seiner Länge aneinander anliegend mit einem jeweiligen Einzelmagnet (4) der anderen Reihe fluchtet.

12. Elektromagnetischer Aktuator nach einem der vorangehenden Ansprüche, der einen Stapel aus zwei Reihen von mindestens zwei Einzelmagneten (4) umfasst, wobei die zwei Reihen übereinandergestapelt sind, wobei zwischen den zwei gestapelten Reihen eine Kompositschicht zwischengestellt ist.

13. Elektromagnetischer Aktuator nach einem der vorangehenden Ansprüche, wobei ein einschichtiges oder mehrschichtiges Material in den Raum zwischen der Aufnahme (5) und dem Einzelmagneten (4) eingesetzt ist.

14. Verfahren zur Herstellung einer Magnetstruktur (6), die Teil eines elektromagnetischen Aktuators nach einem der vorangehenden Ansprüche ist, **dadurch gekennzeichnet, dass** es die folgenden Schritte umfasst:
- Schneiden, aus einer Magnetkachel, die eine Länge, eine Breite und eine Dicke aufweist, die drei Abmessungen der Kachel bilden, mehrerer Einzelmagneten (4) gemäß den drei Abmessungen der Magnetkachel,
- Positionieren und Halten der Einzelmagneten (4) voneinander beabstandet, wobei das Positionieren durch Einsetzen der Einzelmagneten in ein Maschennetz (5a) erfolgt, und Einleiten der Kompositschicht um das Maschennetz (5a),
- Einleiten einer Kompositschicht um Einzelmagneten (4) zu deren Umhüllung, wobei die Kompositschicht eine gesamte äußere Kontur der Magnetstruktur (6) begrenzt.

## Claims

1. An axial-flux rotary electromagnetic actuator, comprising at least one magnet structure consisting of multiple single magnets (4), said at least one magnet structure (6) forming a successive block serving as a magnet pole and being accommodated within at least one support (2) belonging to a partially hollow disk-like shaped rotor (1), said at least one magnet structure (6) having a thickness forming its smallest dimension, each single magnet being in the form of an elongate pad (4) having a length (4a) extending according to a thickness of said at least one magnet structure (6), the elongate pad (4) being cylindrical or in the form of a polyhedron with at least one planar longitudinal face (4b) directed towards a working surface of said at least one magnet structure (6), the elongate pad (4) having a magnetization line extending lengthwise, the single magnets (4) being positioned in said at least one magnet structure (6) away from each other so as to be electrically isolated from each other, said at least one magnet structure (6) including a non-conductive composite layer embedding the single magnets (4), the composite layer delimiting an entire external contour of said at least one magnet structure (6), **characterized in that** the length (4a) of each pad (4) is larger than the diameter of the planar longitudinal face for a cylindrical pad or than a largest diagonal (4c) connecting two vertices of said longitudinal face (4b) for a polyhedron-shaped pad (4), said at least one support (2) being covered over at least one face by a cover disk (8) serving as an axial holding means for consolidating the rotor (1).

2. The electromagnetic actuator according to claim 1, wherein, when it is unitary, said at least one magnet structure (6) forms a unique magnet extending over the actuator or, when they are multiple, the magnet structures (6) consist of successive blocks forming alternate successive magnet poles.

3. The electromagnetic actuator according to claim 2, wherein the magnet structures (6) are multiple and accommodated within said at least one support (2) including branches (3, 3a) delimiting housings therebetween each receiving a respective magnet structure (6), the branches (3) extending substantially radially or inclined in the radial direction of the rotor (1).

4. The electromagnetic actuator according to the preceding claim, wherein the rotor (1) has a peripheral outer crown (17) forming its end section, a rim (9) being formed on the peripheral outer crown (17) enabling the retention of the magnet structures (6).

5. The electromagnetic actuator according to any one of the preceding claims, wherein a ratio of a surface of the longitudinal face (4b) of the pad (4) to the working surface of said at least one magnet structure (6) is lower than 2%.

6. The electromagnetic actuator according to any one of the preceding claims, wherein each pad (4) has its planar longitudinal face (4b) being hexagonal shaped.

7. The electromagnetic actuator according to any one of the preceding claims, wherein the composite layer comprises reinforcing fibers such as glass fibers or plastic material fibers.

8. The electromagnetic actuator according to any one of the preceding claims, wherein said at least one magnet structure (6) comprises at least one meshing (5a) including a plurality of housings (5) for a respective single magnet (4).

9. The electromagnetic actuator according to the preceding claim, wherein said at least one meshing (5a) is in the form of a honeycomb having housings (5) with a hexagonal section.

10. The electromagnetic actuator according to any one of the preceding two claims, wherein each single magnet (4) is glued in a respective housing (5) by a resin reinforced with fibers.

11. The electromagnetic actuator according to any one of the preceding claims, which comprises a stack of two series of single magnets (4), each single magnet (4) of a series being aligned lengthwise with a respective single magnet (4) of the other series by being placed end-to-end.

12. The electromagnetic actuator according to any one of the preceding claims, which comprises a stack of two series of at least two single magnets (4), the two series being stacked on top of one another, a composite layer being interposed between the stacked two series.

13. The electromagnetic actuator according to any one of the preceding claims, wherein a single-layer or multilayer material is introduced into the space between the housing (5) and the single magnet (4).

14. A method for manufacturing a magnet structure (6) belonging to an electromagnetic actuator according to any one of the preceding claims, **characterized in that** it comprises the following steps:
- cutting in a magnetic tile having a length, a width and a thickness forming three dimensions of the tile, of several single magnets (4) according to the three dimensions of the magnetic tile,
- positioning and holding of the single magnets (4) away from each other, the positioning being performed by introduction of the single magnets into a meshing (5a) and injection of the composite layer around the meshing (5a),
- injection of a composite layer around the single magnet (4) for embedding thereof, the composite layer delimiting an entire external contour of the magnet structure (6).
